## Europäisches Patentamt
## European Patent Office
## Office européen des brevets

(11) Publication number: **0 092 294**
**B1**

(12) **EUROPEAN PATENT SPECIFICATION**

(45) Date of publication of patent specification: **16.07.86**

(51) Int. Cl.⁴: **B 60 P 7/14**, B 65 D 90/00, B 61 D 45/00

(21) Application number: **83200579.7**

(22) Date of filing: **19.04.83**

(54) Partition for a cargo carrier for bulk freight.

(30) Priority: **20.04.82 NL 8201634**

(43) Date of publication of application:
**26.10.83 Bulletin 83/43**

(45) Publication of the grant of the patent:
**16.07.86 Bulletin 86/29**

(84) Designated Contracting States:
**BE DE FR GB NL**

(56) References cited:
**CH-A- 390 785**
**FR-A-1 475 369**
**US-A-2 989 011**
**US-A-3 164 395**

(73) Proprietor: **KONINKLIJKE EMBALLAGE INDUSTRIE VAN LEER B.V.**
**P.O. Box 25 Amsterdamseweg 206**
**NL-1180 AA Amstelveen (NL)**

(72) Inventor: **Koudstaal, Willem**
**Doodaarslaan 87**
**NL-3645 JB Vinkeveen (NL)**
Inventor: **Streefkerk, Willem Lodewijk**
**Couwenhoven 6202**
**NL-3703 HP Zeist (NL)**

(74) Representative: **van der Beek, George Frans et al**
**Nederlandsch Octrooibureau Johan de Wittlaan**
**15 P.O. Box 29720**
**NL-2502 LS 's-Gravenhage (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a partition for a cargo carrier for bulk freight, said cargo carrier being provided with an unloading opening closable by a door or board at the inner side of which said partition is to be positioned, said partition including a number of beams to be positioned horizontally one above the other across the unloading opening between two supports, said supports being arranged for vertical location on the walls of the cargo carrier which extend perpendicularly to the plane of the unloading opening. Such a partition is shown in US—A—3164395.

Another partition is known from for instance US—A—2 989 011. This known partition comprises instead a plurality of spaced horizontal beams which are supported in vertical slots of a plurality of suitably spaced longitudinally extending parallel load retaining rails connected to the inner side walls of the container. Said horizontal beams form the support for a lower and an upper partition section each including horizontal panels and vertical slats. The known partitions, although adjustable in different positions, can only be used inside containers which are provided with the longitudinally extending load retaining rails whilst the assembly of the partition is complicated and disassembly under the load of the cargo leads to problems. In the case of US—A—2989011, to obtain a particle tight seal avoiding that granular bulk material passes through the opening between the slats additional provisions are necessary such as a sealing foil placed against the inner side of the partition.

Purpose of the invention is to obtain a partition which in a simple way can be handled preferably by one man, can be removed or placed respectively without special provisions in any cargo or container and always provides a particle tight seal.

According to the invention this object is achieved in that each of the supports includes a plate the height of which corresponds substantially with the height of the partition, said plate being placed against the inner wall of the cargo carrier and having a substantial horizontal dimension parallel to the plane of the wall of the cargo carrier so that the bulk freight urges the plate against said wall to hold the plate in place by friction, said support having at the edge of said plate facing the door or board, a hollow vertical beam connected movably around a vertical axis to the plate being provided with supports for the horizontal beams to be positioned between the plates across the unloading opening. Instead of provisions attached to the inner walls of the container for supporting the beams, the invention makes use of plates which are placed against the inner side walls and are pressed against said side walls by the cargo itself such that the friction forces between said plates and the side walls hold said plates. Said plates are connected movably around a vertical axis to vertical beams which support the horizontal beams which extend in the transverse direction across the unloading opening of the container, said horizontal beams also being under the load of the cargo.

A partition according to the invention can easily be placed inside any type of cargo carrier or container.

Preferably according to the invention the interconnection of the horizontal beams and the vertical edge beams is such that the forces originating from the bulk freight and acting on the horizontal beams cause the vertical edge beams to press outwardly against the inner wall. By this the vertical beams are pressed against the side walls of the container and thereby provide a sealing regardless the construction of the side walls.

According to the invention the supports for the horizontal beams are preferably constituted by apertures in the side walls of the hollow vertical edge beams of the supports. This facilitates assembly because the person who has to assemble the partition has only to place the plates with the vertical edge beams against the side walls of the container and thereafter has only to place each horizontal beam with its ends in the apertures of the vertical edge beams.

To provide easy and immediate locking of the horizontal beams it is according to the invention further preferred that at the level of each supporting aperture the plates are provided with a locking cam spaced from the vertical edge beams and provided on the inner wall thereof and at their ends the horizontal beams have an elastic locking tongue protruding from the ends of the horizontal beams in cooperation with the cams.

When each horizontal beam is placed with its ends in the supporting aperture the elastic locking tongues will snap behind the cams and fix the beams in their proper position. Said beams of course may be kept in their positions by the bulk freight itself, but in particular with a high partition it is favourable that the risk of the beams falling out of their supports is prevented. Preferably the vertical hollow beams of the supports have a triangular cross section the apex of which engages the plate. Said shape is suitable for obtaining a seal and a reliable support for the horizontal beams.

Of course one may use beams having for instance a circular cross section.

Preferably the vertical plates are integrally formed with the vertical beams such that at the junction between plate and beam the interconnection is flexible. Said flexible connection preferably is slightly elastic.

One obtains a simple and cheap construction when the vertical plates and vertical beams are composed of a plurality of layers of corrugated cardboard.

In order to have a light construction for the horizontal beams, they preferably consist of a slat arranged in a vertical plane and provided with one or more hollow tubular ribs at the side to be oriented outwardly. Said horizontal beams preferably are also manufactured from a plurality of layers of corrugated cardboard. Then one obtains light elements which may be handled conveniently by one man.

In order to obtain a mutual seal between the horizontal beams they can be provided with a flexible sealing strip at their lower edge extending at the inner side along a beam situated therebeneath. Instead of a flexible sealing strip, of course, one may give the horizontal beams a shape such that plate shaped parts overlap each other.

Instead of corrugated cardboard other materials are conceivable such as plastics or light metals.

Now, an embodiment of the invention will be elucidated with reference to the drawings.

Figure 1 shows in perspective view the rear part of a vehicle having a container or cargo carrier.

Figure 2 shows in perspective view the partition according to the invention.

Figure 3 shows an exploded view of the two parts of said partition.

Figure 4 is a horizontal cross-section through the connecting construction.

Figure 5 corresponds to figure 4 in an application to another inner container wall.

Figure 6 is a vertical cross-section in a slightly modificated embodiment.

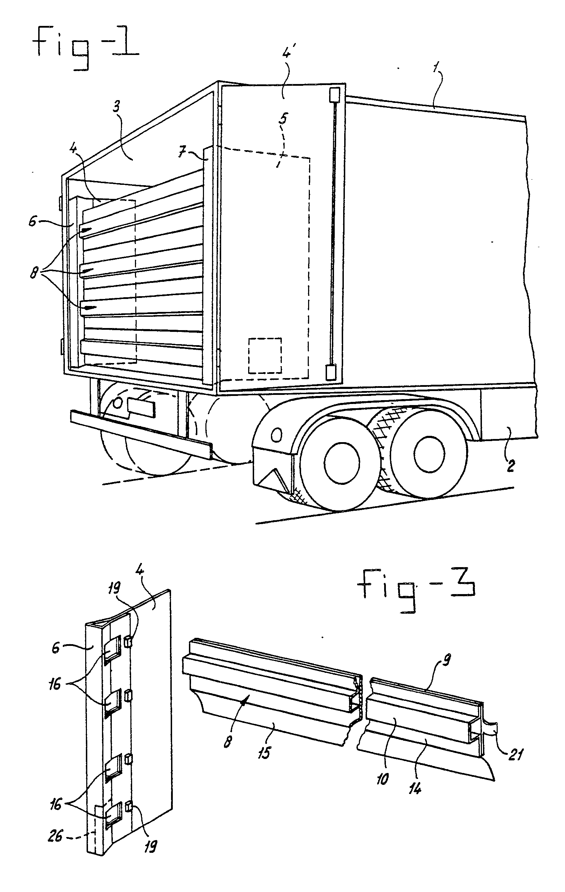

Figure 1 shows the rear part of the container 1 placed on the chassis of a vehicle. Said container has as its rear end an opening 3 closable by the doors 4 shown in open condition.

In said rear opening the partition is positioned a releasable partition comprising the vertical side plates 4 and 5 provided at the edge facing outwardly with a beam 6, 7 respectively. Between the plates 4 and 5 there are a number of horizontal beams 8.

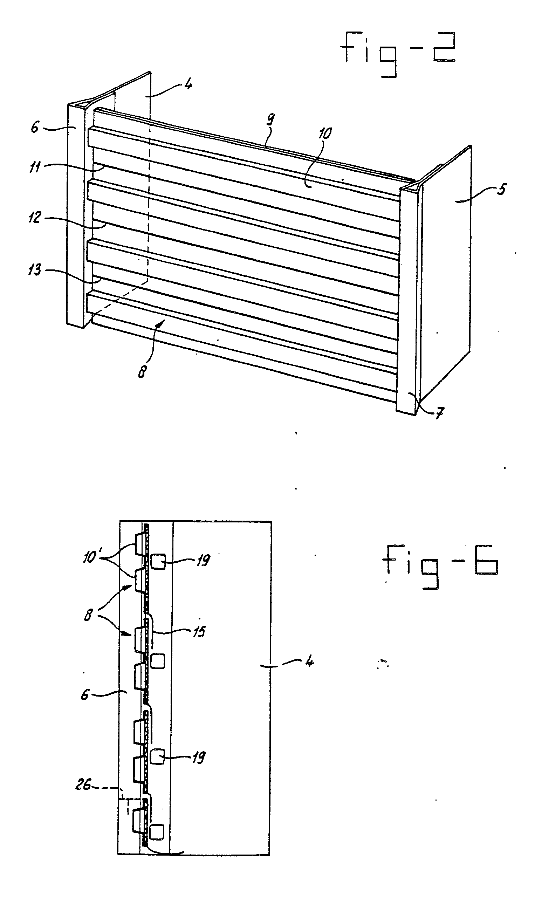

Figure 2 shows slightly more clearly the plates 4 and 5 having the vertical beams 6 and 7 of triangular cross-section and there between the horizontal beams 8 each comprising a slat 9 and a tubular rib. At 11, 12 and 13 the seams are indicated between the beams.

Figure 3 shows a single beam 8 consisting of the vertical slat 9 built up from a plurality of layers of corrugated cardboard. Among said layers the outer layer 14 is reversibly bent into the U-shaped rib defining a hollow tube giving the required stiffness in flexure to the whole horizontal beam 8. With 15 a flexible strip is indicated serving the sealing of the seams 11, 12 and 13 respectively.

Figure 3 similarly shows the beam 6 of the plate 4 having apertures 16 in which the U-shaped rib 10 fits.

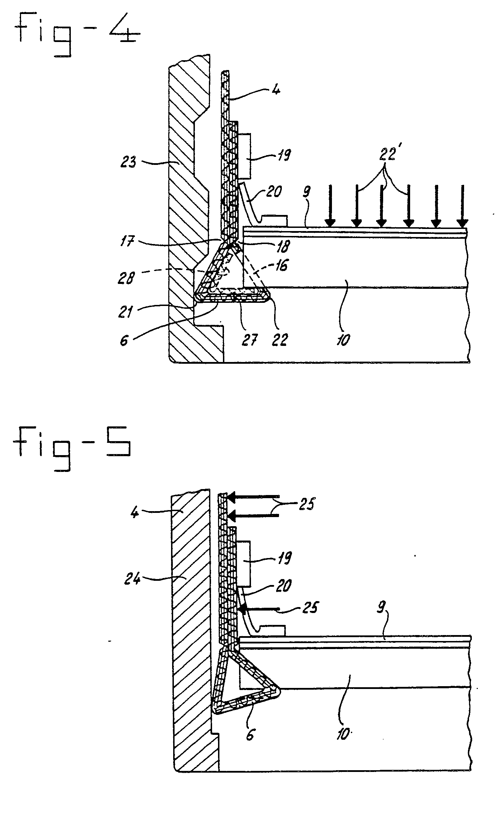

One and another is shown even more clearly in the horizontal cross-section of figure 4. The plate 4 is integrally formed with the hollow vertical beam 6 of triangular cross-section and it is shown in which way the rib 10 is inserted in the aperture 16 of the beam 5. The plate 4 and beam 6 are composed of a plurality of layers of corrugated cardboard being impressed at the apex of the triangular beam 6 and 17 18 in order to define a flexible connection.

At the inner side of the plate 4 cams 19 are provided.

At the level of the rib 10 each beam 8 is provided at its ends with elastic tongues 20 and 21 respectively. In positioning a beam 8 the tongue will slide over the cam 19 and in this way as shown in figures 4 and 5 snap behind the cams by which the beam 8 is blocked in its position.

Figure 4 shows the location of the partition according to the invention in a container or cargo carrier the inner wall of which has the profile shown in figure 4. The profiled side wall shown is provided with recesses in which the corner 21 of the vertical beam 6 engages. When in this way the cargo exerts a pressure force as indicated by the arrows 25 on the horizontal beams 8, by the corners of said beams a force is exerted at 22, which force defines a moment with respect to the more or less elastic pivot point formed by the impressions 17 and 18, a moment pressing the corner 21 tight against the side wall 23 of the container.

Figure 5 shows a comparable situation in a container the side wall of which has a relatively flat inner wall. The vertical beam 6 of triangular cross-section is bent slightly inwardly because of the cargo pressing the vertical plate 4 against the side wall 24 in the direction of the arrows 25.

Figure 6 shows a vertical cross-section with a view on the plate 4 having the beam 6 and it is seen that the horizontal beams 8 are provided with two tubular ribs 10. Further it is to be seen how the sealing strips 15 extends.

Figure 3 shows in the central part of the lower end of the vertical beam 6 a dashline 26, which line may be found in figure 6 similarly. Said line 26 is cut-line provided in the cardboard. When the beam is cut along said line, the part keeping the lower horizontal beam in its position may be removed and consequently, also said lower beam. In this way the unloading is allowed in a very simple way, because the removed lower horizontal beam leaves an opening through which the bulk freight can be sucked away or flow out respectively, through which a dragging foil may drawn.

Then, the vertical beam cannot be used anymore.

Of course, it is conceivable to make use of a lockable pivoting part instead of a portion to be cut away at said location.

It is also conceivable to provide also the vertical beams 6 and 7 respectively in both of the legs of triangular cross-section extending to the top with apertures 16 through which the side plates 4 and 5 may be used twice, also after cutting out the lower part according to the line 26.

Further it is conceivable to continue the aperture 16 around the corner 22 up to the line 27 in figure 4 and to provide in the cavity of the beams 6 and 7 respectively a profiled bar 28 as indicated by dashed lines in figure 4. By pulling it upwardly subsequent unlocking of the horizontal beams 8 takes place. Said carrier being open at the upper side.

Therefore, based on the principle of the invention it is allowed to position within each cargo carrier or container an end partition ensuring a particle-tight seal for the bulk freight and permitting handling by one man. Said end partition may be very cheap so that after having been used once it may be thrown away without problems, but it may also according to the construction be implemented with slightly higher costs such that it may be used one or several times up to an unlimited number of times.

## Claims

1. Partition for a cargo carrier (1) for bulk freight, said cargo carrier (1) being provided with an unloading opening (3) closable by a door (4') or board at the inner side of which said partition is to be positioned, said partition including a number of beams (8) to be positioned horizontally one above the other across the unloading opening (3) between two supports (6, 7), said supports (6, 7) being arranged for vertical location on the walls (23, 24) of the cargo carrier (1) which extend perpendicularly to the plane of the unloading opening (3), characterized in that each of the supports (6, 7) includes a plate (4, 5) the height of which corresponds substantially with the height of the partition, said plate (4, 5) being placed against the inner wall of the cargo carrier (1) and having a substantial horizontal dimension parallel to the plane of the wall (23, 24) of the cargo carrier (1) so that the bulk freight urges the plate (4, 5) against said wall (23, 24) to hold the plate (4, 5) in place by friction, said support having at the edge of said plate (4, 5) facing the door or board, a hollow vertical beam (6, 7) connected movably around a vertical axis to the plate (4, 5) being provided with supports (16) for the horizontal beams (8) to be positioned between the plates (4, 5) across the unloading opening (3).

2. Partition according to claim 1, characterized in that the interconnection of the horizontal beams (8) and the vertical edge beams (6, 7) is such that the forces originating from the bulk freight and acting on the horizontal beams (8) cause the vertical edge beams (6, 7) to press outwardly against the inner wall.

3. Partition according to claim 1 or 2, characterized in that the supports (16) for the horizontal beams (8) are constituted by apertures (16) in the side walls of the hollow vertical edge beams (6, 7) of the supports.

4. Partition according to claim 3, characterized in that at the level of each supporting aperture (16) the plates (4, 5) are provided with a locking cam (19) spaced from the vertical edge beams (6, 7) and provided on the inner wall thereof and at their ends the horizontal beams (8) have an elastic locking tongue (20, 11) protruding from the ends of the horizontal beams (8) and locking the horizontal beams (8) in cooperation with the cams (19).

5. Partition according to one or more of the preceding claims characterized in that the vertical hollow beams (6, 7) of the supports have a triangular cross section the apex of which engages the plate (4, 5).

6. Partition according to one or more of the preceding claims characterized in that the vertical plates 4, 5 are integrally formed with the vertical beams (6, 7) such that at the junction between plate (4, 5) and beam (6, 7) the interconnection is flexible (17, 18).

7. Partition according to claim 6, characterized in that the vertical plates (4, 5) and beams (6, 7) are composed of a plurality of layers from corrugated cardboard.

8. Partition according to one or more of the preceding claims, characterized in that each of the horizontal beams (8) consists of a slat (9) arranged in a vertical plane and provided with one or more hollow tubular ribs (10) at the side to be oriented outwardly.

9. Partition according to claims 3 and 8 characterized in that the tubular ribs (10) fit with their ends in the apertures (16) of the vertical edge beams (6, 7).

10. Partition according to claim 8 oc 9 characterized in that the horizontal beams (8) are composed of a plurality of layers from corrugated cardboard.

11. Partition according to one or more of the preceding claims characterized in that the horizontal beams (8) has a flexible sealing strip (15) at its lower edge.

## Patentansprüche

1. Scheidewand für ein Warentransportmittel (1) für Schüttgüter, wobei das Warentransportmittel (1) mit einer Entladeöffnung (3) versehen ist, die mittels einer Tür (4') oder einer Platte verschließbar ist, an deren inneren Seite die Unterteilung positionierbar ist, wobei die Scheidewand eine Anzahl von Trägern (8) enthält, die horizontal einzeln übereinander über der Entladeöffnung (3) zwischen zwei Trägern (6, 7) positionierbar sind, und wobei die Träger (6, 7) an vertikalen Stellen an den Wänden (23, 24) des Warentransportmittels (1) angeordnet sind, die sich senkrecht zu der Ebene der Entladeöffnung (3) erstrecken, dadurch gekennzeichnet, daß jeder Träger (6, 7) eine Platte (4, 5) enthält, deren Höhe im wesentlichen der Höhe der Scheidewand entspricht, daß die Platte (4, 5) gegen die innere Wand des Warentransportmittels (1) legbar ist und eine beträchtliche Horizontalabmessung parallel zu der Ebene der Wand (23, 24) des Warentransportmittels (1) hat, so daß die Schüttgüter die Platte (4, 5) gegen die Wand (23, 24) drücken, um die Platte (4, 5) an Ort und Stelle mittels Reibung zu halten, daß der Träger am Rand der Platte (4, 5), der der Tür oder Platte zugewandt ist, einen hohlen vertikalen Träger (6, 7) hat, der beweglich um eine vertikale Achse mit der Platte (4, 5) verbunden ist, die mit Trägern (16) für die horizontalen Träger (8) versehen ist, die zwischen den Platten (4, 5) über der Entladeöffnung (3) positionierbar sind.

2. Scheidewand nach Anspruch 1, dadurch gekennzeichnet, daß die Verbindung der horizontalen Träger (8) und der vertikalen Randträger (6, 7) derart ist, daß die von den Schüttgütern erzeugten und auf die horizontalen Träger (8) wirkenden Kräfte bewirker, daß die vertikalen Randträger (6, 7) nach außen gegen die innere Wand gepreßt werden.

3. Scheidewand nach Anspruch 1 oder 2, dadurch gekennzeichnet, daß die Träger (16) für die horizontalen Träger (8) von Öffnungen (16) in den Seitenwänden der hohlen, vertikalen Randträger (6, 7) der Träger gebildet werden.

4. Scheidewand nach Anspruch 3, dadurch gekennzeichnet, daß in der Höhe jeder Tragöffnung (16) die Platten (4, 5) mit einem Sperrnocken (19) versehen sind, der in einem Abstand von den vertikalen Randträgern (6, 7) vorgesehen ist, und daß an der inneren Wand und an ihren Enden die horizontalen Träger (8) eine elastische Sperrzone (20, 11) haben, die von den Enden der horizontalen Träger (8) vorsteht und die horizontalen Träger (8) im Zusammenwirken mit den Nocken (19) blockiert.

5. Scheidewand nach einem oder mehreren der vorangehenden Ansprüche, dadurch gekennzeichnet, daß die vertikalen hohlen Träger (6, 7) der Träger einen dreieckigen Querschnitt haben, wobei die Spitze in Eingriff mit der Platte (4, 5) ist.

6. Scheidewand nach einem oder mehreren der vorangehenden Ansprüche, dadurch gekennzeichnet, daß die vertikalen Platten (4, 5) einteilig mit dem vertikalen Träger (6, 7) ausgebildet sind, so daß an der Verbindung zwischen der Platte (4, 5) von dem Träger (6, 7) die Zwischenverbindung flexibel (17, 18) ist.

7. Scheidewand nach Anspruch 6, dadurch gekennzeichnet, daß die vertikalen Platten (4, 5) und die Träger (6, 7) aus einer Mehrzahl von Wellpappenschichten bestehen.

8. Scheidewand nach einem oder mehreren der vorangehenden Ansprüche, dadurch gekennzeichnet, daß jeder horizontale Träger (8) aus einem Stab (9) besteht, der in einer vertikalen Ebene angeordnet ist und mit einer oder mehreren hohlen Rippen (10) an der nach außen weisenden Seite versehen ist.

9. Scheidewand nach Anspruch 3 und 8, dadurch gekennzeichnet, daß die rohrförmigen Rippen (10) mit ihren Enden in die Öffnungen (16) der vertikalen Randträger (6, 7) passen.

10. Scheidewand nach Anspruch 8 oder 9, dadurch gekennzeichnet, daß die horizontalen Träger (8) aus einer Mehrzahl von Wellpappenschichten bestehen.

11. Scheidewand nach einem oder mehreren der vorangehenden Ansprüche, dadurch gekennzeichnet, daß die horizontalen Träger (8) einen flexiblen Dichtungsstreifen (16) an ihrem unteren Rand haben.

**Revendications**

1. Cloison pour moyen de transport (1) de marchandise en vrac, ledit moyen de transport (1) présentant une ouverture de déchargement (3) refermable par une port (4') ou un panneau sur le côté intérieur duquel ladite cloison doit être placée, ladite cloison comportant un certain nombre de poutres (8) destinées à être placées horizontalement l'une au-dessus de l'autre en travers de l'ouverture de déchargement (3) entre deux supports (6, 7), lesdits supports (6, 7) étant agencés pour être placés verticalement sur les parois (23, 24) du moyen de transport (1) qui s'étendent perpendiculairement au plan de l'ouverture de déchargement (3), caractérisé en ce que chacun des supports (6, 7) comporte une plaque (4, 5) dont la hauteur correspond sensiblement à la hauteur de la cloison, cette plaque (4, 5) étant placée contre la paroi intérieure du moyen de transport (1) et présentant une dimension horizontale substancielle parallèlement au plan de la paroi (23, 24) du moyen de transport (1), de façon que la marchandise en vrac presse la plaque (4, 5) contre ladite paroi (23, 24) pour maintenir la plaque (4, 5) en place par frottement, ledit support comportant, sur le bord de ladite plaque (4, 5) faisant face à la porte ou au panneau, une poutre verticale creuse (6, 7) reliée de manière amovible autour d'un axe vertical à la plaque (4, 5) et pourvue de supports (16) pour les poutres horizontales (B) destinées à être placées entre les plaques (4, 5) en travers de l'ouverture de déchargement (3).

2. Cloison selon la revendication 1, caractérisée en ce que le raccordement entre les poutres horizontales (8) et les poutres verticales des bords (6, 7) est tel que les forces émanants de la marchandise en vrac et agissant sur les poutres horizontales (8) amènent les poutres verticales des bords (6, 7) à exercer sur la paroi intérieure une pression dirigée vers l'extérieur.

3. Cloison selon la revendication 1 ou 2, caractérisée en ce que les supports (16) des poutres horizontales (8) sont constitués par des ouvertures (16) ménagées dans les parties latérales des poutres verticales creuses des bords (6, 7) des supports.

4. Cloison selon la revendication 3, caractérisée en ce qu'au niveau de chaque ouverture de support (16) les plaques (4, 5) présentent une came de verrouillage (19) espacée des poutres verticales des bors (6, 7) et prévue sur la paroi intérieure des plaques (4, 5) et les poutres horizontales (8) présentant à leurs extrémités une languette de verrouillage élastique (20, 11) dépassant des extrémités des poutres horizontales (8) et verrouillant les poutres horizontales (8) en coopération avec les cames (19).

5. Cloison selon l'une ou plusieurs des revendications précédentes caractérisée en ce que les poutres creuses verticales (6, 7) des supports ont une section triangulaire dont un sommet porte contre la plaque (4, 5).

6. Cloison selon l'une ou plusieurs des revendications précédentes caractérisée en ce que les plaques verticales (4, 5) sont façonnées d'un seul tenant avec les poutres verticales (6, 7) de façon que le raccordement existant à la jonction entre la plaque (4, 5) et la poutre (6, 7) soit flexible (17, 18).

7. Cloison selon la revendication 6, caractérisée en ce que les plaques (4, 5) et les poutres (6, 7) verticales sont composées d'une série de couches en carton ondulé.

8. Cloison selon l'une ou plusieurs des revendications précédentes, caractérisée en ce que chacune des poutres horizontales (8) est constituée par une latte (9) disposée dans un plan vertical et présentant une ou plusieurs nervures tubulaires creuses (10) sur le côte destiné à être orienté vers l'extérieur.

9. Cloison selon les revendications 3 et 8, caractérisée en ce que les nervures tubulaires (10) s'emboitent par leurs extrémités dans les ouvertures (16) des poutres verticales des bords (6, 7).

10. Cloison selon la revendication 8 ou 9, caractérisée en ce que les poutres horizontales (8) sont composées d'une série de couches en carton ondulé.

11. Cloison selon l'une ou plusieurs des revendications précédentes, caractérisée en ce que les poutres horizontales (8) comportent une garniture d'étanchéité souple (15) sur leur bord inférieur.

Fig-1

Fig-3

Fig-2

Fig-6

Fig-4

Fig-5